(19) Europäisches Patentamt
European Patent Office
Office européen des brevets

(11) **EP 2 816 237 B1**

(12) **EUROPEAN PATENT SPECIFICATION**

(45) Date of publication and mention
of the grant of the patent:
**23.05.2018 Bulletin 2018/21**

(51) Int Cl.:
***F15B 1/26*** *(2006.01)*          ***F15B 15/14*** *(2006.01)*
***F15B 15/18*** *(2006.01)*          ***B64C 25/22*** *(2006.01)*

(21) Application number: **14171318.0**

(22) Date of filing: **05.06.2014**

(54) **Electro hydrostatic actuator**

Elektrischer hydrostatischer Aktuator

Actionneur électro-hydrostatique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.06.2013 JP 2013127620**

(43) Date of publication of application:
**24.12.2014 Bulletin 2014/52**

(73) Proprietor: **Sumitomo Precision Products Co., Ltd.
Hyogo 660-0891 (JP)**

(72) Inventors:
• **Masutani, Kazuhiro
Amagasaki-shi, Hyogo 660-0891 (JP)**

• **Kondo, Taku
Amagasaki-shi, Hyogo 660-0891 (JP)**
• **Onishi, Takaaki
Amagasaki-shi, Hyogo 660-0891 (JP)**

(74) Representative: **BRP Renaud & Partner mbB
Rechtsanwälte Patentanwälte
Steuerberater
Königstraße 28
70173 Stuttgart (DE)**

(56) References cited:
**EP-A2- 2 570 344          US-A- 2 457 467
US-A- 5 941 508          US-A1- 2002 030 311
US-A1- 2008 022 672          US-A1- 2008 190 104**

## Description

BACKGROUND

A technique disclosed herein relates to an electro hydrostatic actuator (hereinafter referred to as an "EHA"), and particularly relates to an EHA applicable to a landing gear retraction/extension system of an aircraft.

In recent years, hydraulic supply systems have no longer been mounted in conventional aircrafts, considering improvement of fuel efficiency of aircrafts, maintainability of aircrafts, etc. As described in, e.g., Japanese Unexamined Patent Publication No. 2009-228792, it has been proposed that EHAs are mounted as actuators for, e.g., retraction/extension of landing gears, a control surface operation, a braking operation, and a landing gear steering operation. Moreover, the EHAs of the similar type are posted on the following Internet site (hereinafter referred to as a "non-patent document"): "Intelligent Solutions Control Systems and Actuation Technologies," Parker Hannifin Corporation, URL :http://www.parker.com/literature/Control%20Systems%20Division/CSD%20literature/ CSDBrochure.pdf.

The EHA includes a hydraulic actuator, a hydraulic supply source having a hydraulic pump and an electric motor, and a hydraulic manifold. The hydraulic actuator includes, e.g., a single-rod cylinder having movable and fixed ends fixed to an aircraft body. The single-rod cylinder is extended/compressed using hydraulic pressure supplied from the hydraulic supply source through the hydraulic manifold. In order to absorb a change in total volume of a bore oil chamber and an annulus oil chamber of the single-rod cylinder due to extension/compression thereof, a hydraulic circuit also includes a tank (i.e., a reservoir) configured to store operation oil.

For example, in a landing gear retraction/extension system, each of the following actuators may be replaced by the EHA: a gear actuator for retracting/lowering a landing gear; a door actuator for opening/closing a door of a landing gear bay in which a landing gear is stored; and a down-lock release actuator for releasing a mechanism for maintaining a landing-gear-lowered state.

SUMMARY

In, e.g., the conventional EHA described in the non-patent document, the single-rod cylinder and components such as the hydraulic pump, the electric motor, the hydraulic manifold, and the reservoir are integrated together in the state in which these components are arranged at the outer periphery of the single-rod cylinder extending in an axial direction. Such integration shortens an operation oil pipe as much as possible, and is advantageous to reduction in weight of the EHA and improvement of reliability of the EHA.

However, the size of the conventional EHA in a radial direction increases, and the center of gravity of each component disposed at the outer periphery of the single-rod cylinder is much apart from a center axis of the single-rod cylinder in the radial direction. Vibration and impact are input to the EHA for aircraft. Since the center of gravity of each component is much apart from the center axis of the single-rod cylinder in the radial direction, the moment about an attachment end part, i.e., the movable end or the fixed end, of the single-rod cylinder increases when vibration and impact are input to the EHA. Accordingly, the strength of an attachment structure at the fixed end or the movable end should be enhanced. However, enhancement of the strength of the attachment structure produces an adverse effect in satisfying needs for reducing the weight of the EHA mounted in the aircraft.

On the foregoing point, in the EHA described in Japanese Unexamined Patent Publication No. 2009-228792, the reservoir is built in a rod of the single-rod cylinder. According to such a configuration, there are advantages that the outer diameter of the EHA can be reduced and that the center of gravity of the reservoir can be coincident with the center axis of the single-rod cylinder.

However, the configuration in which the reservoir is built in the rod of the single-rod cylinder results in another disadvantage that it is difficult to increase a reservoir capacity. That is, in order to increase the reservoir capacity, the diameter of the rod of the single-rod cylinder increases. However, a larger rod diameter results in a smaller cross-sectional area of the annulus oil chamber of the single-rod cylinder. Thus, in order to ensure a required area of load, the outer diameter of the cylinder should be increased. As a result, the size of the EHA increases. In the case where the components, such as the hydraulic pump and the electric motor, other than the reservoir are arranged at the outer periphery of the single-rod cylinder, the center of gravity of each of such components is much more apart from the center axis of the single-rod cylinder due to an increase in cylinder diameter. This results in an increase in moment about the fixed end or the movable end of the single-rod cylinder upon input of vibration and impact. Thus, the strength of the attachment structure should be increased.

Japanese Utility Model Publication No. S47-025431 describes an EHA in which a reservoir having a doughnut-shaped cross section is provided at the outer periphery of a single-rod cylinder. However, Japanese Utility Model Publication No. S47-025431 fails to describe the use and purpose of the EHA, arrangement of components such as a hydraulic pump and an electric motor, and integration of the single-rod cylinder and the components.

The technique disclosed herein has been made in view of the foregoing situation, and aims to provide an EHA which has a relatively-large reservoir capacity and whose size and weight is reduced with reduction in size and weight of an attachment structure of the EHA.

An actuator of this type is known from the document US 20080022672.

The technique disclosed herein is intended for an EHA. The EHA includes a single-rod cylinder including a fixed end positioned on one end side of the single-rod cylinder in an axial direction and a movable end positioned on the other end side of the single-rod cylinder in the axial direction, and configured so as to be compressed/extended by supply of operation oil to cause the movable end to reciprocate in the axial direction; a hydraulic supply source configured to supply the operation oil to the single-rod cylinder, and including a hydraulic pump and an electric motor; and a reservoir provided between the single-rod cylinder and the hydraulic supply source in a hydraulic circuit and capable of storing the operation oil.

At a predetermined position of the single-rod cylinder close to the fixed end, the hydraulic supply source is disposed at periphery of the single-rod cylinder, and is integrated with the single-rod cylinder, and the reservoir is formed in a double cylindrical shape, and is, at a position close to the movable end relative to the hydraulic supply source, integrated with the single-rod cylinder in a state in which the single-rod cylinder is inserted into the reservoir so as to be coaxial with the reservoir.

BRIEF DESCRIPTION OF THE DRAWINGS

FIG. 1 is a perspective view illustrating the appearance of an EHA.
FIG. 2A is a plan view of the EHA, and FIG. 2B is a front view of the EHA.
FIG. 3 is a cross-sectional view along an III-III line of FIG. 2A.
FIG. 4 is a circuit diagram illustrating an example of a hydraulic circuit of the EHA.
FIG. 5 is a model diagram showing the magnitude of moment load acting on the EHA.
FIGS. 6A and 6B are views for comparing the difference in external force direction acting on a single-rod hydraulic cylinder and comparing the size of a required area of load.
FIG. 7 is a hydraulic circuit diagram illustrating another configuration example different from the configuration of FIG. 4.

DETAILED DESCRIPTION

The technique disclosed herein is intended for an EHA. The EHA includes a single-rod cylinder including a fixed end positioned on one end side of the single-rod cylinder in an axial direction and a movable end positioned on the other end side of the single-rod cylinder in the axial direction, and configured so as to be compressed/extended by supply of operation oil to cause the movable end to reciprocate in the axial direction; a hydraulic supply source configured to supply the operation oil to the single-rod cylinder, and including a hydraulic pump and an electric motor; and a reservoir provided between the single-rod cylinder and the hydraulic supply source in a hydraulic circuit and capable of storing the operation oil.

At a predetermined position of the single-rod cylinder close to the fixed end, the hydraulic supply source is disposed at periphery of the single-rod cylinder, and is integrated with the single-rod cylinder, and the reservoir is formed in a double cylindrical shape, and is, at a position close to the movable end relative to the hydraulic supply source, integrated with the single-rod cylinder in a state in which the reservoir is fitted onto the single-rod cylinder so as to be coaxial with the single-rod cylinder.

According to the foregoing configuration, the reservoir is formed in a double cylindrical shape, and is fitted onto the single-rod cylinder. The "double cylindrical shape" is such a shape that two cylinders having different diameters are arranged coaxial with each other and that a doughnut-shaped cross section is formed between the cylinders. Since the single-rod cylinder is disposed inside the double-cylindrical reservoir, the inner diameter of the reservoir is relatively large. Thus, even if the outer diameter of the reservoir is not so large, the cross-sectional area of the reservoir is relatively large. This is advantageous to an increase in reservoir capacity.

Since the hydraulic supply source including the hydraulic pump and the electric motor is disposed close to the fixed end relative to the reservoir, the reservoir and the hydraulic supply source are arranged so as to be displaced from each other in the axial direction. As compared to the case where a reservoir and a hydraulic supply source are arranged so as to overlap with each other in a radial direction, the diameter of the EHA in which the single-rod cylinder, the reservoir, and the hydraulic supply source are integrated together is smaller. Thus, a relatively-large reservoir capacity can be ensured while the size of the entirety of the EHA can be reduced.

Since the hydraulic supply source is disposed at the periphery of the single-rod cylinder, the center of gravity of the hydraulic supply source is apart from a center axis of the single-rod cylinder in the radial direction. However, since the hydraulic supply source is disposed relatively close to the fixed end, moment generated at the movable end or the fixed end due to displacement of the center of gravity when vibration and impact are input to the EHA is relatively small. On the other hand, since the reservoir is disposed close to the movable end relative to the hydraulic supply source, the reservoir is disposed relatively apart from the fixed end. However, since the double-cylindrical reservoir is disposed coaxial with the single-rod cylinder, the center of gravity of the reservoir is coincident with or is substantially coincident with the center axis of the single-rod cylinder. Thus, moment generated at the movable end or the fixed end due to the reservoir when vibration and impact are input to the EHA is zero or small. Since the moment generated at the movable end or the fixed end decreases as described above, the strength of an attachment structure at the movable and fixed ends of the single-rod cylinder can be set at a low level, and therefore the size and weight of the EHA in which the single-rod cylinder, the hydraulic supply source, and the reservoir are integrated together are reduced.

The single-rod cylinder includes a cylinder body and a cylinder end protruding from an end part of the cylinder body in the axial direction and having a diameter smaller than that of the cylinder body. The fixed end is provided at a protruding end of the cylinder end. The reservoir is fitted onto the cylinder body so as to be coaxial with the cylinder body. At periphery of the cylinder end, the hydraulic supply source is disposed between the cylinder body and the fixed end.

Since the cylinder end has the diameter smaller than that of the cylinder body, a space is formed around the cylinder end protruding from the cylinder body. Since the hydraulic supply source is disposed in the space formed around the cylinder end, the outer diameter of the EHA can be small.

On the other hand, although the reservoir is fitted onto the cylinder body having a relatively-large diameter, the reservoir is in the double cylindrical shape as described above. Thus, a required reservoir capacity can be ensured, and the outer diameter of the reservoir can be relatively small. As a result, the diameter of the EHA in which the single-rod cylinder, the reservoir, and the hydraulic supply source are integrated together is small across the entirety of the single-rod cylinder from the movable end to the fixed end in the axial direction.

The EHA further includes a hydraulic manifold provided in the hydraulic circuit and configured to control hydraulic supply between the hydraulic supply source and the single-rod cylinder. The hydraulic manifold is, together with the hydraulic supply source, disposed at the periphery of the cylinder end.

As described above, the space is formed around the cylinder end having a relatively-small diameter. Since the hydraulic manifold is disposed in such a space, the size of the entirety of the EHA is reduced. Moreover, the center of gravity of the hydraulic manifold is displaced from the center axis of the single-rod cylinder. However, since the center of gravity of the hydraulic manifold is close to the fixed end, moment generated at the movable end or the fixed end when vibration and impact are input to the EHA is small.

For redundancy in the hydraulic circuit, the hydraulic supply source may include a plurality of hydraulic supply sources. Each hydraulic supply source is disposed at a predetermined position of the single-rod cylinder close to the fixed end.

For the redundancy in the hydraulic circuit, the plurality of hydraulic supply sources are provided in the EHA in order to ensure reliability of the EHA. Thus, the weight of the EHA increases by an increase in hydraulic supply source. However, since the hydraulic supply sources are arranged at the predetermined positions close to the fixed end, the center of gravity of each hydraulic supply source is set at the position close to the fixed end as described above. Thus, moment generated at the movable end or the fixed end when vibration and impact are input to the EHA is small. That is, such arrangement configuration is suitable for an EHA whose balance in weight is likely to be lost due to the plurality of hydraulic supply sources.

The single-rod cylinder may be an actuator configured to retract/lower a landing gear in a landing gear retraction/extension system of an aircraft.

As described above, since the size and weight of the EHA can be reduced with reduction in size and weight of the attachment structure even in the case where vibration and impact are input to the EHA, the EHA is suitable as the actuator used for the landing gear retraction/extension system of the aircraft. Note that such an actuator includes a gear actuator for retracting/lowering a landing gear, a door actuator for opening/closing a door of a landing gear bay in which a landing gear is stored, and a down-lock release actuator for releasing the mechanism for maintaining a landing-gear-lowered state. The EHA having the foregoing configuration may be employed as any of the foregoing actuators.

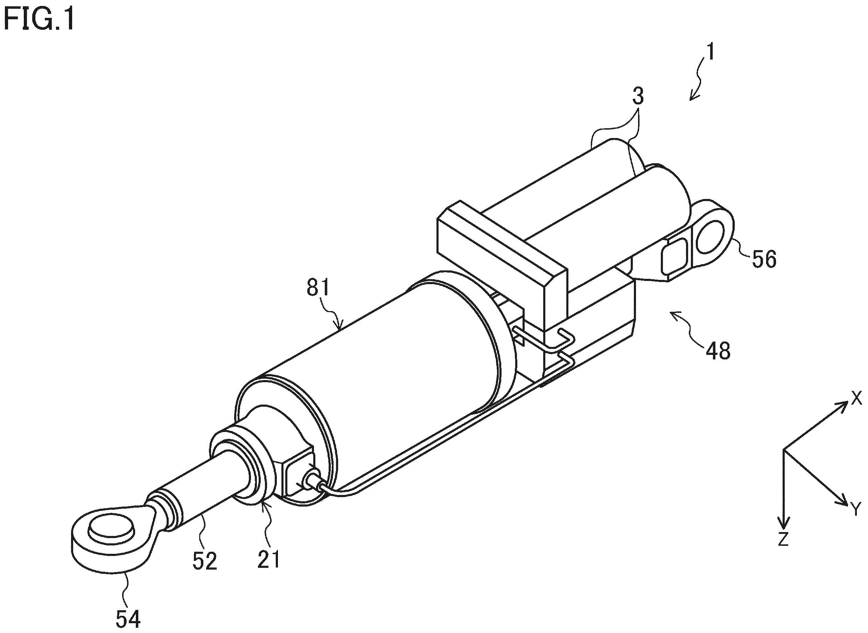

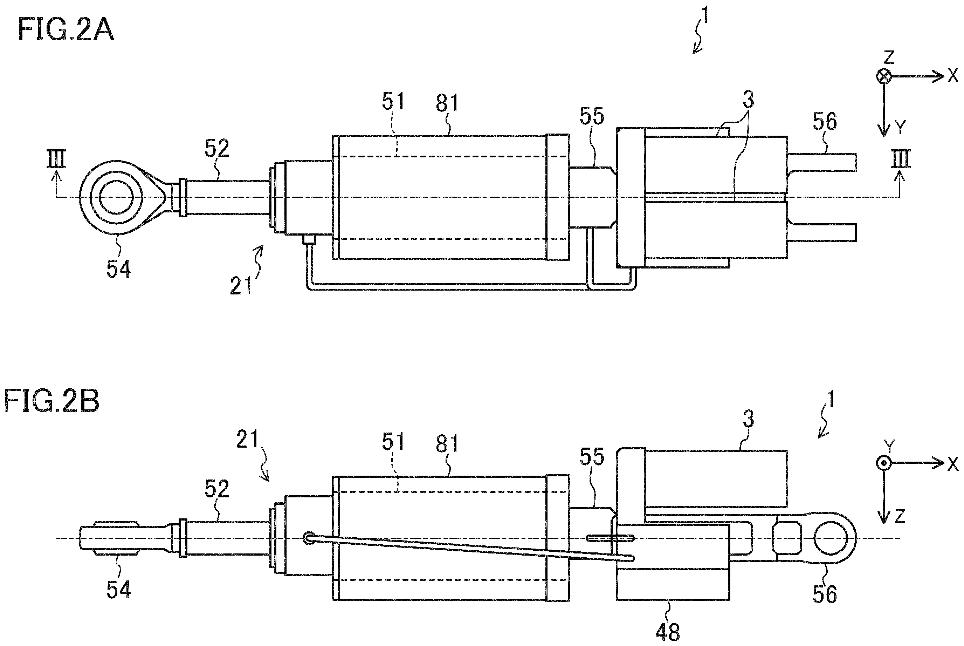

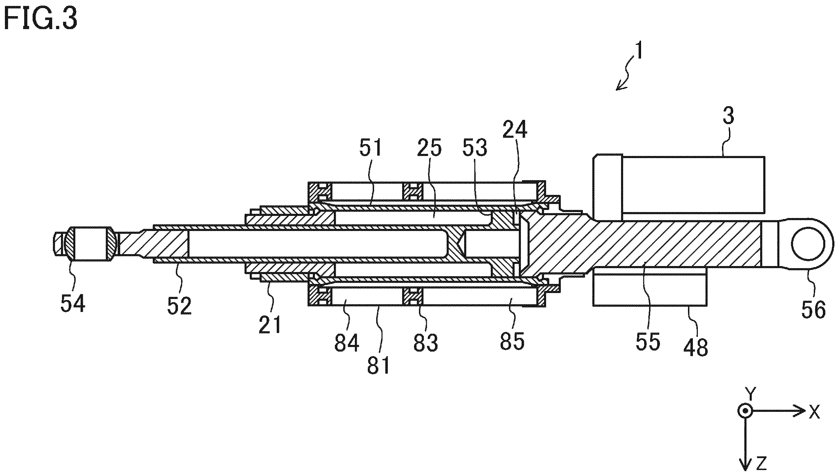

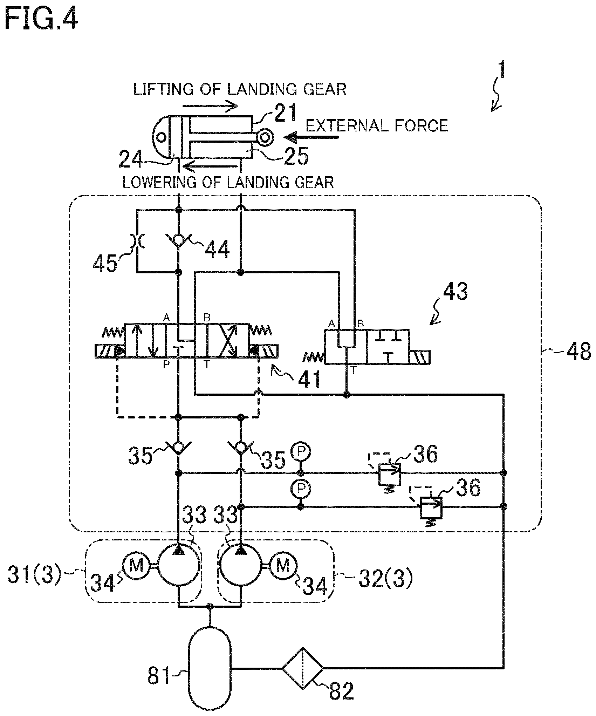

An embodiment of the EHA will be described below with reference to drawings. The EHA described below is an example. FIGS. 1-4 illustrate the example where an EHA 1 is employed as an actuator for a landing gear retraction/extension system of an aircraft. FIG. 1 is a perspective view illustrating an example of the appearance of the EHA 1. FIG. 2A is a plan view of the EHA 1. FIG. 2B is a front view of the EHA 1. FIG. 3 is a cross-sectional view along an III-III line of FIG. 2A. FIG. 4 is a circuit diagram illustrating an example of a hydraulic circuit of the EHA 1. Note that the configuration of the hydraulic circuit is not limited to the example illustrated in the figure. The landing gear retraction/extension system typically includes three types of actuators, i.e., a gear actuator for retracting/lowering a landing gear, a door actuator for opening/closing a door of a landing gear bay in which the landing gear is stored, and a down-lock release actuator for releasing the mechanism for maintaining a landing-gear-lowered state. The EHA 1 illustrated in FIGS. 1-4 is particularly employed as the gear actuator.

Referring to FIG. 4, the EHA 1 includes a single-rod hydraulic cylinder 21 extended/compressed using supply of operation oil. Note that, in FIG. 4, an operation oil path is indicated by a solid line, and a pilot hydraulic path is indicated by a dashed line.

A bore oil chamber 24 and an annulus oil chamber 25 are formed in the single-rod hydraulic cylinder 21. In the single-rod hydraulic cylinder 21, a piston head separates the bore oil chamber 24 and the annulus oil chamber 25 from each other. A first port of the single-rod hydraulic cylinder 21 communicates with the bore oil chamber 24, and a second port of the single-rod hydraulic cylinder 21 communicates with the annulus oil chamber 25. Operation oil flows into the bore oil chamber 24 through the first port, or flows out from the bore oil chamber 24 through the first port. Moreover, operation oil flows into the annulus oil chamber 25 through the second port, or flows out from the annulus oil chamber 25 through the second port.

The single-rod hydraulic cylinder 21 which is the gear actuator is configured to lift the landing gear against external force upon extension and to release load to lower the landing gear upon retraction. Thus, the area of load of the single-rod hydraulic cylinder 21 is determined depending on the diameter of the bore oil chamber 24.

In the EHA 1, the hydraulic circuit configured to supply operation oil to the single-rod hydraulic cylinder 21 includes, for improvement of reliability, first and second hydraulic supply sources 31, 32, and therefore the redundancy of the first and second hydraulic supply sources 31, 32 is ensured. In the hydraulic circuit, the first and second hydraulic supply sources 31, 32 are arranged in parallel to each other. In the description below, the first and second hydraulic supply sources 31, 32 are sometimes referred to as "hydraulic supply sources 3" or a "hydraulic supply source 3"

The hydraulic supply source 3 includes a single hydraulic pump 33 and a single electric motor 34 which are drive-connected together. In the present embodiment, the hydraulic pump 33 is a one-direction rotary pump which is rotatable only in one direction and which is configured to take operation oil through an inlet port and discharge the operation oil through an outlet port. Various types of pumps may be employed as the hydraulic pump 33. The electric motor 34 is, e.g., a three-phase motor, and is configured to receive power supplied from a not-shown power source to drive the hydraulic pump 33.

The first and second hydraulic supply sources 31, 32 each include a check valve 35 disposed downstream (i.e., an outlet port side) of the hydraulic pump 33. The check valve 35 is configured to, when one of the first and second hydraulic supply sources 31, 32 is stopped due to failure thereof, prevent operation oil discharged from the hydraulic pump 33 of the other one of the first and second hydraulic supply sources 31, 32 from flowing back to the stopped hydraulic supply source 3.

The first and second hydraulic supply sources 31, 32 arranged in parallel to each other are joined together at upstream ends thereof so as to be connected to a reservoir 81. The reservoir 81 is a tank configured to absorb a change in total volume of the bore oil chamber 24 and the annulus oil chamber 25 of the single-rod hydraulic cylinder 21 due to extension/compression of the single-rod hydraulic cylinder 21. The stroke of the single-rod hydraulic cylinder 21 is set at a relatively-long stroke, and, accordingly, the capacity of the reservoir 81 is also set at a relatively-large capacity.

The first and second hydraulic supply sources 31, 32 are joined together at downstream ends thereof so as to be connected to a gear selector valve 41. Note that each hydraulic pump 33 of the first and second hydraulic supply sources 31, 32 is branched at a downstream end thereof, and the branched line is connected to the reservoir 81 through a relief valve 36 and a filter 82.

The gear selector valve 41 is a four-port three-position switching valve formed with four ports, i.e., a P-port, a T-port, an A-port, and a B-port. The gear selector valve 41 has a function to switch between the state in which operation oil is supplied to the single-rod hydraulic cylinder 21 and the state in which operation oil is not supplied to the single-rod hydraulic cylinder 21. The P-port of the gear selector valve 41 is connected to the outlet port of each hydraulic pump 33 of the first and second hydraulic supply sources 31, 32. The T-port of the gear selector valve 41 is connected to the reservoir 81. The A-port of the gear selector valve 41 is connected to the bore oil chamber 24 of the single-rod hydraulic cylinder 21. The B-port of the gear selector valve 41 is connected to the annulus oil chamber 25 of the single-rod hydraulic cylinder 21.

The gear selector valve 41 is also a hydraulic pilot type solenoid valve, and is biased to a center position by a spring. At the center position, each of the A-port and the B-port of the gear selector valve 41 communicates with the T-port of the gear selector valve 41. At a first offset position (i.e., a position on the left side as viewed in FIG. 4), the A-port and the P-port of the gear selector valve 41 communicate with each other, and the B-port and the T-port of the gear selector valve 41 communicate with each other. At a second offset position (i.e., a position on the right side as viewed in FIG. 4), the A-port and the T-port of the gear selector valve 41 communicate with each other, and the B-port and the P-port of the gear selector valve 41 communicate with each other. Operation oil is selectively supplied to the bore oil chamber 24 or the annulus oil chamber 25 of the single-rod hydraulic cylinder 21 by switching of the gear selector valve 41.

A check valve 44 and an orifice 45 arranged in parallel to each other are interposed between the A-port of the gear selector valve 41 and the bore oil chamber 24 of the single-rod hydraulic cylinder 21. The check valve 44 and the orifice 45 are configured to control the speed of compression of the single-rod hydraulic cylinder 21.

A dump valve 43 is interposed between the single-rod hydraulic cylinder 21 and the reservoir 81. The dump valve 43 is a three-port two-position switching valve formed with an A-port, a B-port, and a T-port. The A-port of the dump valve 43 is connected to the annulus oil chamber 25 of the single-rod hydraulic cylinder 21. The B-port of the dump valve 43 is connected to the bore oil chamber 24 of the single-rod hydraulic cylinder 21. The T-port of the dump valve 43 is connected to the reservoir 81.

The dump valve 43 is a solenoid valve biased to a normal position by a spring. At the normal position, each of the A-port and the B-port of the dump valve 43 communicates with the T-port. At an offset position, all of the A-port, the B-port, and the T-port of the dump valve 43 are blocked.

As indicated by a chain line in FIG. 4, a hydraulic manifold 48 is configured to control hydraulic supply between each of the first and second hydraulic supply sources 31, 32 and the single-rod hydraulic cylinder 21.

Next, the steps of operating the landing gear retraction/extension system including the EHA 1 will be briefly described. A not-shown controller is configured to, when, e.g., a sensor or a switch detects operation of the single-rod hydraulic cylinder 21 and/or operation of the door or the landing gear, drive/stop the electric motors 34 of the first and/or second hydraulic supply sources 31, 32 and switch the gear selector valve 41 and the dump valve 43. Accordingly, the single-rod hydraulic cylinder 21 which is the gear actuator lifts/lowers the landing gear. Although not shown in the figure, the gear selector valve 41 is first switched to the first offset position in order to lift the landing gear from the landing-gear-lowered state. Thus, the A-port and the P-port of the gear selector valve 41 communicate with each other, and the B-port and the T-port of the gear selector valve 41 communicate with each other. Moreover, the dump valve 43 is switched to the offset position, thereby blocking the A-port, the B-port, and the T-port thereof.

In the foregoing state, the first and/or second hydraulic supply sources 31, 32 are driven. Operation oil is supplied to the bore oil chamber 24 of the single-rod hydraulic cylinder 21 through the gear selector valve 41 and the check valve 44. Accordingly, the single-rod hydraulic cylinder 21 is extended to lift the not-shown landing gear. Note that operation oil discharged from the annulus oil chamber 25 upon extension of the single-rod hydraulic cylinder 21 returns to the reservoir 81 through the gear selector valve 41 and the filter 82.

On the other hand, although not shown in the figure, the gear selector valve 41 is switched to the second offset position in order to lower the landing gear. Accordingly, the B-port and the P-port of the gear selector valve 41 communicate with each other. When the first and/or second hydraulic supply sources 31, 32 are driven, operation oil is supplied to the annulus oil chamber 25 of the single-rod hydraulic cylinder 21. The single-rod hydraulic cylinder 21 is compressed to lower the landing gear stored in the landing gear bay. Operation oil discharged from the bore oil chamber 24 upon retraction of the single-rod hydraulic cylinder 21 returns to the reservoir 81 through the orifice 45. The orifice 45 throttles the flow of operation oil to control the speed of compression of the single-rod hydraulic cylinder 21. That is, the speed of lowering of the landing gear is controlled.

In the EHA 1 configured as described above, arrangement of components such as the single-rod hydraulic cylinder 21, the first and second hydraulic supply sources 31, 32 (i.e., the hydraulic pumps 33 and the electric motors 34), the hydraulic manifold 48, and the reservoir 81 is devised, and such components are integrated together. Since such integration shortens an operation oil pipe as much as possible, it is advantageous to reduction in weight of the EHA 1 and improvement of reliability of the EHA 1. In particular, arrangement illustrated in FIGS. 1-3 increases the reservoir capacity, as well as reducing the size and weight of the EHA 1. Moreover, such arrangement simplifies an attachment structure of the EHA 1. Such simplification will be described below with reference to FIGS. 1-3. Note that an X-axis, a Y-axis, and a Z-axis are set as illustrated in the figures, and the description will be made below using such axes as necessary.

Referring to FIGS. 1-3, the single-rod hydraulic cylinder 21 of the EHA 1 includes a cylinder 51, a piston rod 52 protruding from one side (i.e., the left side as viewed in FIG. 3) of the cylinder 51 in an X-axis direction, and a piston head 53 integrated with an end part of the piston rod 52 in the cylinder 51 and dividing the inside of the cylinder 51 into the bore oil chamber 24 and the annulus oil chamber 25. The cylinder 51, the piston rod 52, and the piston head 53 form a cylinder body. Although not shown in the figure, a tip end of the piston rod 52 forms a movable end 54 attached to the landing gear of the aircraft and reciprocating in the X-axis direction in accordance with compression/extension of the single-rod hydraulic cylinder 21.

A cylinder end 55 protruding from an end part of the cylinder 51 in the X-axis direction is attached to the other side (i.e., the right side as viewed in FIG. 3) of the single-rod hydraulic cylinder 21. The cylinder end 55 is formed in a rod shape having a diameter smaller than that of the cylinder 51. A protrusion end of the cylinder 51 forms a bifurcated fixed end 56 at which the single-rod hydraulic cylinder 21 is attached and fixed to an aircraft body.

The reservoir 81 is in a double cylindrical shape, and is fitted onto the cylinder 51 so as to be coaxial with the cylinder 51. A free piston 83 is disposed in the reservoir 81 having a doughnut-shaped cross section, and divides the inside of the reservoir 81 into an oil chamber 84 where operation oil is stored and a gas chamber 85 where pressurized nitrogen gas is sealed. Although not shown in the figure, a bellows may be used instead of the gas chamber 85.

Since the reservoir 81 is formed in the double cylindrical shape and is disposed so as to surround the outer periphery of the cylinder 51, the inner diameter of the reservoir 81 is set to a relatively-large diameter so that the cylinder 51 can be disposed in the reservoir 81. As a result, even if the outer diameter of the reservoir 81 is not so large, a relatively-large cross-sectional area and thus a relatively-large reservoir capacity can be ensured. This reduces the outer diameter of the EHA 1 as much as possible, and is advantageous to reduction in size and weight of the EHA 1. Moreover, since the reservoir 81 is disposed coaxial with the cylinder 51, the EHA 1 has excellent gravity-center stabilization. This point will be described below in detail.

The hydraulic supply sources 3 each including the hydraulic pump 33 and the electric motor 34 are arranged on a fixed-end side relative to the reservoir 81. That is, the hydraulic supply sources 3 are, between the cylinder 51 and the fixed end 56, arranged at the periphery of the cylinder end 55 having the relatively-small diameter. Since the cylinder end 55 has the relatively-small diameter as described above, a space can be ensured around the cylinder end 55. The hydraulic supply sources 3 are arranged in such a space. Specifically, the hydraulic supply sources 3 are arranged in a Y-axis direction at the positions adjacent to the cylinder end 55 in a Z-axis direction. Thus, the hydraulic supply sources 3 both provided for ensuring the redundancy can be integrated with the single-rod hydraulic cylinder 21, without increasing the outer diameter of the EHA 1 and increasing the length of the EHA 1 in the X-axis direction.

As in the hydraulic supply sources 3, the hydraulic manifold 48 is also disposed in the space formed around the cylinder end 55. Specifically, the hydraulic manifold 48 is disposed in part of the space opposite to the hydraulic supply sources 3 relative to the cylinder end 55 in the Z-axis direction. Thus, the hydraulic supply sources 3 and the hydraulic manifold 48 can be integrated with the single-rod hydraulic cylinder 21, without increasing the outer diameter of the EHA 1.

The reservoir 81, the hydraulic supply sources 3, and the hydraulic manifold 48 which are the components of the EHA 1 are arranged so as to be displaced from each other in the X-axis direction. The reservoir 81 is disposed relatively close to the movable end 54. In other words, the reservoir 81 is disposed apart from the fixed end 56. The hydraulic supply sources 3 and the hydraulic manifold 48 are arranged relatively close to the fixed end 56. In other words, the hydraulic supply sources 3 and the hydraulic manifold 48 are arranged in proximity to the fixed end 56. As described above, the reservoir 81 is formed in the double cylindrical shape, and is disposed coaxial with the cylinder 51. Thus, the center of gravity of the reservoir 81 is coincident with or is substantially coincident with the center axis (i.e., the X-axis) of the single-rod hydraulic cylinder 21 defining a straight line connecting between the movable end 54 and the fixed end 56. On the other hand, since the hydraulic supply sources 3 and the hydraulic manifold 48 are arranged at the periphery of the cylinder end 55, the center of gravity of each of the hydraulic supply sources 3 and the hydraulic manifold 48 is displaced from the center axis of the single-rod hydraulic cylinder 21.

Vibration and impact are input to the EHA 1 employed for the landing gear retraction/extension system of the aircraft. The input vibration and impact (having a magnitude of $\alpha$G) are loaded on the center of gravity of each component such as the reservoir 81, the hydraulic supply sources 3, and the hydraulic manifold 48. In this state, when the center of gravity of the component is displaced from the center axis of the single-rod hydraulic cylinder 21, force of M$\alpha$ is generated at the component due to the weight (M) of the component.

Since each component is integrated with the single-rod hydraulic cylinder 21 including the movable end 54 and the fixed end 56, force generated at each component is loaded on the EHA 1 due to fixed point reaction force at the movable end 54 and the fixed end 56 of the single-rod hydraulic cylinder 21.

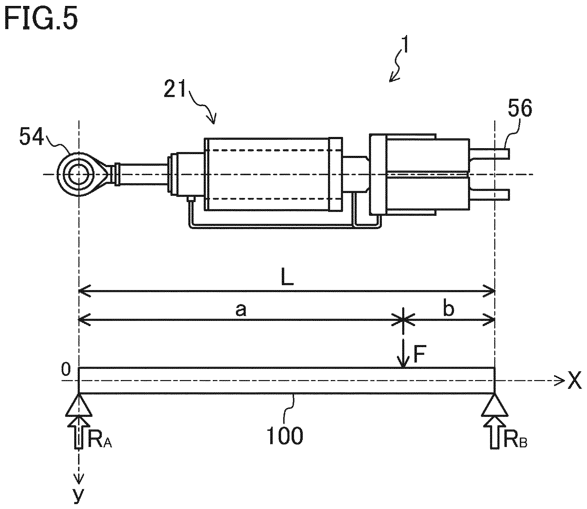

Suppose that the EHA 1 illustrated on the upper side of FIG. 5 is regarded as a beam 100 illustrated on the lower side of FIG. 5. The relationship between the position of load generated at each of the foregoing components and the moment about a fixed point upon input of vibration and impact will be discussed. Referring to FIG. 5, the movable end 54 and the fixed end 56 of the single-rod hydraulic cylinder 21 correspond respectively to fixed points $R_A$, $R_B$ of the model. On the assumption that a load point is at the center of gravity of the component, the distance between the fixed point $R_A$ and a load point F is referred to as a "distance a," and the distance between the fixed point $R_B$ and the load point F is referred to as a "distance b." The moment about the fixed point $R_A$, $R_B$ is represented by the following expression (1):

$$M = \frac{a \times b}{L} \cdot F \quad \cdots\cdots (1)$$

Suppose that the load point of the component is at the middle of the beam, i.e., a = b = L/2. The moment $M_1$ about the fixed point is represented by the following expression (2):

$$M_1 = \frac{a \times b}{L} \cdot F = \frac{L/2 \times L/2}{L} \cdot F = \frac{1}{4} L \cdot F \quad \cdots\cdots (2)$$

On the other hand, suppose that the load point of the component is at the position near the fixed point $R_B$, i.e., a = 7L/8 and b = L/8. The moment $M_2$ about the fixed point is represented by the following expression (3):

$$M_2 = \frac{a \times b}{L} \cdot F = \frac{7L/8 \times L/8}{L} \cdot F = \frac{7}{64} L \cdot F \quad \cdots\cdots (3)$$

As will be clearly seen from comparison between the expressions (2) and (3), $M_2 < M_1$ (= 16/64L·F). Thus, the components, such as the hydraulic supply sources 3 and the hydraulic manifold 48, whose barycentric positions are displaced from the center axis of the single-rod hydraulic cylinder 21 are arranged in proximity to the fixed end 56 so that the moment about the movable end 54 and the fixed end 56 can be reduced when vibration and impact are input to the EHA 1. Thus, the attachment strength of the movable end 54 and the fixed end 56 can be reduced by a decrease in moment. As a result, the size and weight of the EHA 1 can be reduced. Note that no component can be disposed in proximity to the reciprocatable movable end 54.

Although the reservoir 81 is disposed apart from the fixed end 56, the center of gravity of the reservoir 81 is substantially on the center axis of the single-rod hydraulic cylinder 21. Thus, no moment is generated upon input of vibration and impact. For reduction in size and weight of the EHA 1, it is advantageous that the hydraulic supply sources 3 and the hydraulic manifold 48 are arranged so as to be displaced from the double-cylindrical reservoir 81 in an axial direction.

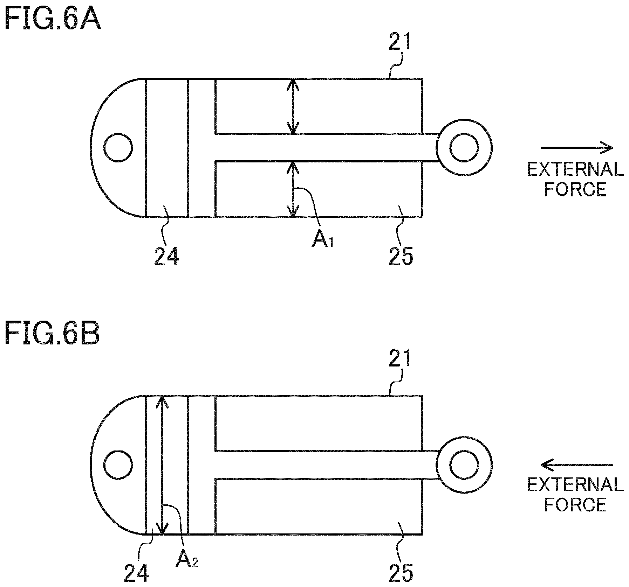

Referring to FIG. 6B, since external force acts on the gear actuator in the direction in which the single-rod hydraulic cylinder 21 is compressed, the area of load of the gear actuator is determined by the cross-sectional area $A_2$ of the bore oil chamber 24. On the other hand, when external force acts in the direction in which the single-rod hydraulic cylinder 21 is extended, the area of load of the gear actuator is determined by the cross-sectional area $A_1$ of the annulus oil chamber 25 as illustrated in FIG. 6A. Thus, in order to ensure the same area of load between both of the foregoing configurations, the outer diameter of the single-rod hydraulic cylinder 21 can be smaller in the configuration illustrated in FIG. 6B. This is advantageous to the configuration in which the double-cylindrical reservoir 81 is fitted onto the single-rod hydraulic cylinder 21 because an increase in outer diameter of the EHA 1 can be reduced.

(Variation of Hydraulic Circuit)

As described above, the landing gear retraction/extension system of the aircraft includes the gear actuator, as well as the door actuator and the down-lock release actuator. Upon retracting/lowering of the landing gear, these actuators are sequentially operated. Thus, the actuators may share the hydraulic supply source and the hydraulic manifold configured to supply operation oil to the actuators.

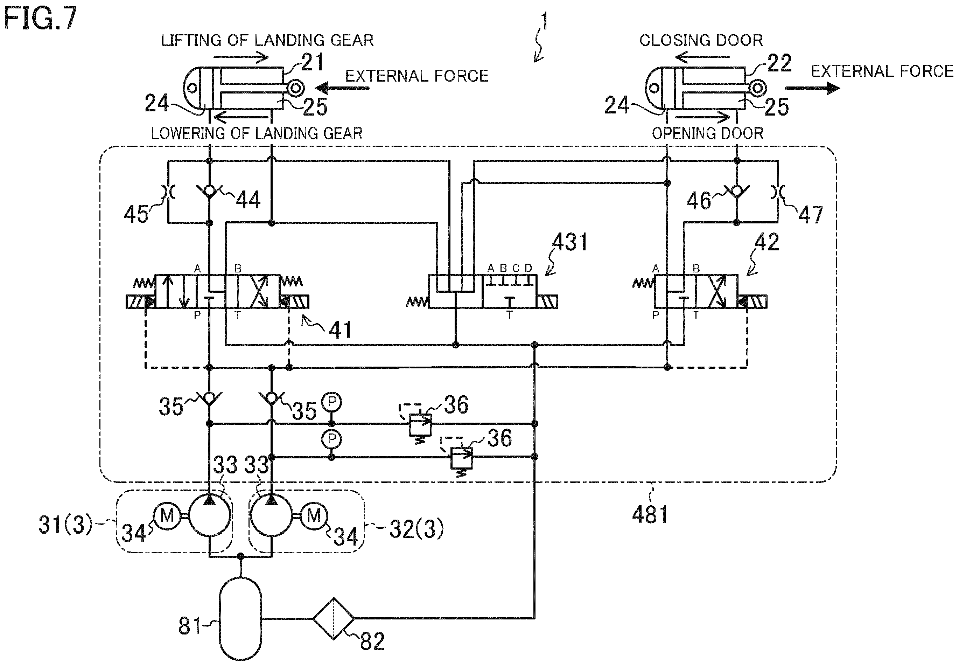

For example, FIG. 7 illustrates the example configuration in which the gear actuator and the door actuator share the same hydraulic supply source and the same hydraulic manifold. Note that the same reference numerals as those shown in FIG. 4 will be used to represent equivalent elements, and the description thereof may not be repeated.

In the example configuration illustrated in FIG. 7, e.g., the single-rod hydraulic cylinder 21 serving as the gear actuator, a hydraulic manifold 481, the hydraulic supply sources 3, and the reservoir 81 are integrated together as illustrated in FIGS. 1-3, whereas a single-rod hydraulic cylinder 22 serving as the door actuator is configured as a separate member connected to the hydraulic manifold 481. For the sake of simplicity of description, in the description below, a reference numeral "21" is assigned to the gear actuator, and a reference numeral "22" is assigned to the door actuator.

The example configuration illustrated in FIG. 7 is different from the example configuration illustrated in FIG. 4 in that a door selector valve 42, a check valve 46, and an orifice 47 are additionally provided and that a dump valve 431 has a different configuration.

The first and second hydraulic supply sources 31, 32 are joined together at the downstream ends thereof, and the door selector valve 42 is connected to such downstream ends. The door selector valve 42 is a four-port two-position switching valve formed with four ports, i.e., a P-port, a T-port, an A-port, and a B-port. The door selector valve 42 has a function to selectively supply operation oil to the door actuator 22. The P-port of the door selector valve 42 is connected to the outlet port of each hydraulic pump 33 of the first and second hydraulic supply sources 31, 32. The T-port of the door selector valve 42 is connected to the reservoir 81. The A-port of the door selector valve 42 is connected to the bore oil chamber 24 of the door actuator 22. The B-port of the door selector valve 42 is connected to the annulus oil chamber 25 of the door actuator 22.

The door selector valve 42 is also a hydraulic pilot type solenoid valve, and is biased to a normal position by a spring. At the normal position, each of the A-port and the B-port of the door selector valve 42 communicates with the P-port of the door selector valve 42. At an offset position, the A-port and the T-port of the door selector valve 42 communicate with each other, and the B-port and the P-port of the door selector valve 42 communicate with each other. Operation oil is selectively supplied to the bore oil chamber 24 or the annulus oil chamber 25 of the door actuator 22 by switching of the door selector valve 42.

The check valve 46 and the orifice 47 arranged in parallel to each other are interposed between the B-port of the door selector valve 42 and the annulus oil chamber 25 of the door actuator 22. The check valve 46 and the orifice 47 are configured to control the speed of extension of the door actuator 22.

The dump valve 431 is a five-port two-position switching valve formed with an A-port, a B-port, a C-port, a D-port, and a T-port. The A-port of the dump valve 431 is connected to the annulus oil chamber 25 of the gear actuator 21. The B-port of the dump valve 431 is connected to the bore oil chamber 24 of the gear actuator 21. The C-port of the dump valve 431 is connected to the bore oil chamber 24 of the door actuator 22. The D-port of the dump valve 431 is connected to the annulus oil chamber 25 of the door actuator 22. The T-port of the dump valve 431 is connected to the reservoir 81.

The dump valve 431 is also a solenoid valve biased to a normal position by a spring. The dump valve 431 is similar to the dump valve 43 illustrated in FIG. 4 in that, at the normal position, all of the A-port, the B-port, the C-port, and the D-port of the dump valve 431 communicate with the T-port of the dump valve 431 and that, at an offset position, all of the A-port, the B-port, the C-port, the D-port, and the T-port of the dump valve 431 are blocked.

As in the gear actuator 21, the single-rod cylinder forms the door actuator 22. However, unlike the gear actuator 21, the door actuator 22 is configured to release load upon extension to open the door and to close the door against external force upon compression.

Next, steps of operating the landing gear retraction/extension system having the configuration illustrated in FIG. 7 will be briefly described. First, when the steps of opening the door, retracting the landing gear, and closing the door are sequentially performed from a landing-gear-lowered and door-closed state, the gear selector valve 41 is at the center position, and the door selector valve 42 is at the normal position. After the dump valve 431 is switched to the offset position, the electric motors 34 of the first and/or second hydraulic supply sources 31, 32 are driven. Operation oil flows into the bore oil chamber 24 of the door actuator 22, thereby extending the door actuator 22. While the door actuator 22 is being extended, operation oil discharged from the annulus oil chamber 25 also flows into the bore oil chamber 24 of the door actuator 22 through the orifice 47 and the door selector valve 42. In this manner, even if the amount of operation oil discharged from the first and/or second hydraulic supply sources 31, 32 is small, the door actuator 22 is extended to open the door of the landing gear bay.

After the door of the landing gear bay is opened, the gear selector valve 41 is switched to the first offset position. This allows the A-port and the P-port of the gear selector valve 41 to communicate with each other, and allows the B-port and the T-port of the gear selector valve 41 to communicate with each other. As in the foregoing, the first and/or second hydraulic supply sources 31, 32 supply operation oil to the bore oil chamber 24 of the gear actuator 21 through the check valve 44. The gear actuator 21 is extended to lift the not-shown landing gear.

After the landing gear is stored in the landing gear bay, the gear selector valve 41 is switched to the center position, whereas the door selector valve 42 is switched to the offset position. Accordingly, the first and second hydraulic supply sources 31, 32 supply operation oil to the annulus oil chamber 25 of the door actuator 22. Thus, the door actuator 22 is compressed. Operation oil discharged from the bore oil chamber 24 while the door actuator 22 is being compressed returns to the reservoir 81 through the door selector valve 42 and the filter 82. The door is closed as just described, and a series of the steps of retracting the landing gear is completed. After completion of the steps of retracting the landing gear, the following steps are performed in order to maintain a landing-gear-lifted and door-closed state: the door selector valve 42 is switched to the normal position; each electric motor 34 of the first and second hydraulic supply sources 31, 32 is stopped; and the dump valve 43 is switched to the normal position.

Upon lowering of the landing gear, the steps of opening the door, lowering the landing gear, and closing the door are sequentially performed from the landing-gear-lifted and door-closed state, thereby bringing about the landing-gear-lowered and door-closed state. The step of opening the door is performed as in the foregoing manner. The door actuator 22 is extended to open the door of the landing gear bay.

Subsequently, the gear selector valve 41 at the center position is switched to the second offset position. The B-port and the P-port of the gear selector valve 41 come into communicate with each other, and the first and second hydraulic supply sources 31, 32 supply operation oil to the annulus oil chamber 25 of the gear actuator 21. The gear actuator 21 is compressed to lower the landing gear stored in the landing gear bay. Operation oil discharged from the bore oil chamber 24 while the gear actuator 21 is being compressed returns to the reservoir 81 through the orifice 45. The orifice 45 throttles the flow of operation oil to control the speed of compression of the gear actuator 21.

After the gear actuator 21 is compressed to lower the landing gear, the gear selector valve 41 returns to the center position, whereas the door selector valve 42 is switched to the offset position. As described above, the door actuator 22 is compressed to close the door. After a series of the steps of lowering the landing gear is completed, the following steps are performed in order to maintain the landing-gear-lowered and door-closed state: the door selector valve 42 is switched to the normal position; each electric motor 34 of the first and second hydraulic supply sources 31, 32 is stopped; and the dump valve 43 is switched to the normal position.

Although the different configuration of the hydraulic manifold 481 is employed as described above, the single-rod hydraulic cylinder 21, the reservoir 81, the first and second hydraulic supply sources 3, and the hydraulic manifold 481 can be arranged as in the configuration illustrated in FIGS. 1-3. That is, the size and weight of the EHA 1 can be reduced.

In the example configuration illustrated in FIG. 7, since two actuators, i.e., the gear actuator 21 and the door actuator 22, share the reservoir 81, a more reservoir capacity may be required considering a capacity difference between the actuators. In this case, the foregoing arrangement configuration are advantageous to an increase in reservoir capacity, as well as reduction in size and weight of the EHA 1.

FIG. 7 illustrates the example configuration of the landing gear retraction/extension system including the gear actuator and the door actuator. However, the landing gear retraction/extension system may include three actuators, i.e., the gear actuator, the door actuator, and the down-lock release actuator. In this case, although a different configuration of the hydraulic manifold is employed, the single-rod hydraulic cylinder 21, the reservoir 81, the first and second hydraulic supply sources 3, and the hydraulic manifold can be arranged as in the configuration illustrated in FIGS. 1-3.

The present disclosure is not limited to the foregoing embodiments, and changes and modifications may be made to the embodiments without departing from the spirit and technical features of the present disclosure. The foregoing embodiments have been set forth merely for the purpose of examples in nature, and should not be interpreted as limiting the scope of the disclosure. The scope of the disclosure is defined by the appended claims.

**Claims**

1. An electro hydrostatic actuator comprising:

   - a single-rod cylinder (21) including a fixed end (56) positioned on one end side of the single-rod cylinder (21) in an axial direction and a movable end (54) positioned on the other end side of the single-rod cylinder (21) in the axial direction, and configured so as to be compressed/extended by supply of operation oil to cause the movable end to reciprocate in the axial direction;
   - a hydraulic supply source (3) configured to supply the operation oil to the single-rod cylinder (21), and including a hydraulic pump (33) and an electric motor (34);

   a reservoir (81) provided between the single-rod cylinder (21) and the hydraulic supply source (3) in a hydraulic circuit and capable of storing the operation oil; and

   - a hydraulic manifold (48, 481) provided in the hydraulic circuit and configured to control hydraulic supply between the hydraulic supply source (3) and the single-rod cylinder (21),

   the single-rod cylinder (21) including a cylinder body (51, 52, 53) and a cylinder end (55) protruding from an end part of the cylinder body (51, 52, 53) in the axial direction and having a diameter smaller than that of the cylinder body (51, 52, 53), the fixed end (56) being provided at a protruding end of the cylinder end (55),
   the reservoir (81) being formed in a double cylindrical shape, and is, at a position close to the movable end (54) relative to the hydraulic supply source (3), integrated with the cylinder body (51, 52, 53) in a state in which the cylinder body (51, 52, 53) is inserted into the reservoir (81) so as to be coaxial with the reservoir (81),
   **characterized in that**

   - at the periphery of the cylinder end (55), a space is formed between the cylinder body (51, 52, 53) and the fixed end (56), and that
   - in the space at the periphery of the cylinder end (55), the hydraulic manifold (48, 481) and the hydraulic supply source (3) are disposed between the cylinder body (51, 52, 53) and the fixed end (56) to be integrated with each other.

2. The electro hydrostatic actuator (1) of claim 1,
   wherein for redundancy in the hydraulic circuit, the hydraulic supply source (3) includes a plurality of hydraulic supply sources (3), and each hydraulic supply source (3) is disposed in the space at the periphery of the fixed end (55).

3. The electro hydrostatic actuator (1) of claim 1 or 2,
   wherein the single-rod cylinder (21) is an actuator configured to lift/lower a landing gear in a landing gear retraction/extension system of an aircraft.

**Patentansprüche**

1. Elektrohydrostatischer Aktuator, umfassend:

   - einen Zylinder (21) mit einseitiger Kolbenstange, der ein festes Ende (56) umfasst, das in einer axialen Richtung auf einer Endseite des Zylinders (21) mit einseitiger Kolbenstange liegt, und ein bewegliches Ende (54) umfasst, das in der axialen Richtung auf der anderen Endseite des Zylinders (21) mit einseitiger Kolbenstange liegt, und so ausgebildet, dass er durch Zufuhr von Betriebsöl komprimiert/gestreckt wird, um das bewegliche Ende zu veranlassen, sich in der axialen Richtung hin- und herzubewegen;
   - eine Hydraulikzufuhrquelle (3), die dazu ausgebildet ist, dem Zylinder (21) mit einseitiger Kolbenstange das Betriebsöl zuzuführen, und die eine Hydraulikpumpe (33) und einen Elektromotor (34) einschließt;

   einen Behälter (81), der zwischen dem Zylinder (21) mit einseitiger Kolbenstange und der Hydraulikzufuhrquelle (3) in einem Hydraulikkreis bereitgestellt und in der Lage ist, das Betriebsöl zu speichern; und

   - einen Hydraulikverteiler (48, 481), der im Hydraulikkreis bereitgestellt und dazu ausgebildet ist, Hydraulikzufuhr zwischen der Hydraulikzufuhrquelle (3) und dem Zylinder (21) mit einseitiger Kolbenstange zu steuern,

   wobei der Zylinder (21) mit einseitiger Kolbenstange einen Zylinderkörper (51, 52, 53) und ein Zylinderende (55) umfasst, das in der axialen Richtung von einem Endteil des Zylinderkörpers (51, 52, 53) vorspringt und einen kleineren Durchmesser als denjenigen des Zylinderkörpers (51, 52, 53) aufweist, wobei das feste Ende (56) an einem vorspringenden Ende des Zylinderendes (55) bereitgestellt ist,
   wobei der Behälter (81) in einer doppelzylindrischen Form geformt ist und an einer Position nahe dem beweglichen Ende (54) bezogen auf die Hydraulikzufuhrquelle (3), mit dem Zylinderkörper (51, 52, 53) in einem Zustand integriert ist, in dem der Zylinderkörper (51, 52, 53) so in den Behälter (81) eingesetzt ist, dass er koaxial zum Behälter (81) angeordnet ist,
   **dadurch gekennzeichnet, dass**

   - am Umfang des Zylinderendes (55) ein Raum zwischen dem Zylinderkörper (51, 52, 53) und dem festen Ende (56) gebildet ist, und dass
   - in dem Raum am Umfang des Zylinderendes (55) der Hydraulikverteiler (48, 481) und die Hydraulikzufuhrquelle (3) so zwischen dem Zylinderkörper (51, 52, 53) und dem festen Ende (56) angeordnet sind, dass sie ineinander integriert sind.

2. Elektrohydrostatischer Aktuator (1) nach Anspruch 1,
   wobei für Redundanz im Hydraulikkreis die Hydraulikzufuhrquelle (3) eine Vielzahl von Hydraulikzufuhrquellen (3) einschließt, und jede Hydraulikzufuhrquelle (3) in dem Raum am Umfang des festen Endes (55) angeordnet ist.

3. Elektrohydrostatischer Aktuator (1) nach Anspruch 1 oder 2,
   wobei der Zylinder (21) mit einseitiger Kolbenstange ein Aktuator ist, der dazu ausgebildet ist, ein Fahrwerk in einem Fahrwerk-Einzugs-/Ausfahrsystem eines Flugzeugs zu heben/zu senken.

**Revendications**

1. Actionneur électro-hydrostatique comprenant :

   - un cylindre à une tige (21) incluant une extrémité fixe (56) positionnée sur un côté d'extrémité du cylindre à une tige (21) dans une direction axiale et une extrémité mobile (54) positionnée de l'autre côté d'extrémité du cylindre à une tige (21) dans la direction axiale, et configuré de sorte à être compressé/étendu par l'alimentation d'huile de service pour amener l'extrémité mobile à se déplacer alternativement dans la direction axiale ;
   - une source d'alimentation hydraulique (3) configurée pour alimenter en huile de service le cylindre à une tige (21), et incluant une pompe hydraulique (33) et un moteur électrique (34) ;

   un réservoir (81) prévu entre le cylindre à une tige (21) et la source d'alimentation hydraulique (3) dans un circuit hydraulique et apte à stocker l'huile de service ; et

   - un collecteur hydraulique (48, 481) prévu dans le circuit hydraulique et configuré pour commander l'alimentation hydraulique entre la source d'alimentation hydraulique (3) et le cylindre à une tige (21),

le cylindre à une tige (21) incluant un corps de cylindre (51, 52, 53) et une extrémité de cylindre (55) faisant saillie d'une partie d'extrémité du corps de cylindre (51, 52, 53) dans la direction axiale et présentant un diamètre inférieur à celui du corps de cylindre (51, 52, 53), l'extrémité fixe (56) étant prévue sur une extrémité en saillie de l'extrémité de cylindre (55),
le réservoir (81) étant réalisé en une forme cylindrique double et est, sur une position près de l'extrémité mobile (54) par rapport à la source d'alimentation hydraulique (3), intégré au corps de cylindre (51, 52, 53) dans un état dans lequel le corps de cylindre (51, 52, 53) est inséré dans le réservoir (81) de sorte être coaxial avec le réservoir (81), **caractérisé en ce que**

- sur la périphérie de l'extrémité de cylindre (55), un espace est formé entre le corps de cylindre (51, 52, 53) et l'extrémité fixe (56), et que
- dans l'espace sur la périphérie de l'extrémité de cylindre (55), le collecteur hydraulique (48, 481) et la source d'alimentation hydraulique (3) sont disposés entre le corps de cylindre (51, 52, 53) et l'extrémité fixe (56) à intégrer l'un à l'autre.

2. Actionneur électro-hydrostatique (1) selon la revendication 1,
dans lequel pour la redondance dans le circuit hydraulique, la source d'alimentation hydraulique (3) inclut une pluralité de sources d'alimentation hydraulique (3), et chaque source d'alimentation hydraulique (3) est disposée dans l'espace sur la périphérie de l'extrémité fixe (55).

3. Actionneur électro-hydrostatique (1) selon la revendication 1 ou 2,
dans lequel le cylindre à une tige (21) est un actionneur configuré pour lever/abaisser un train d'atterrissage dans un système de rétraction/extension de train d'atterrissage d'un avion.

FIG.1

FIG.2A

FIG.2B

EP 2 816 237 B1

**FIG.3**

# FIG.4

FIG.5

FIG.6A

FIG.6B

# FIG.7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009228792 A
- JP S47025431 B
- US 20080022672 A

**Non-patent literature cited in the description**

- Intelligent Solutions Control Systems and Actuation Technologies. Parker Hannifin Corporation